# EUROPEAN PATENT APPLICATION

(11) **EP 4 572 487 A1**
(43) Date of publication of application: **18.06.2025**
(21) Application number: 23852184.3
(22) Date of filing: 26.04.2023
(51) Int. Cl.: H04W 72/12, H04W 28/06, H04W 72/0446, H04W 72/0453

(54) **TERMINAL, BASE STATION, AND COMMUNICATION METHOD**

(30) Priority: 12.08.2022 JP 2022128835
(71) Applicant: Panasonic Intellectual Property Corporation of America, Torrance, CA 90504 (US)
(72) Inventor: NUNOME, Tomoya, Kadoma-shi, Osaka 571-0057 (JP); SUZUKI, Hidetoshi, Kadoma-shi, Osaka 571-0057 (JP); KUANG, Quan, 63225 Langen (DE); LI, Hongchao, 63225 Langen (DE); OGAWA, Yoshihiko, Kadoma-shi, Osaka 571-0057 (JP)
(74) Representative: Grünecker Patent- und Rechtsanwälte PartG mbB
(86) International application number: PCT/JP2023/016435
(87) International publication number: WO 2024/034198

(57) **Abstract**

This terminal comprises: a control circuit that individually assesses, for a plurality of bands obtained by dividing a frequency band, activation and deactivation of quasistatic transmission and reception in a scheme in which a transmission direction is set for each of the plurality of bands; and a communication circuit that transmits or receives a signal in accordance with the assessment of the activation and deactivation.

## Description

### Technical Field

The present disclosure relates to a terminal, a base station, and a communication method.

### Background Art

In 3rd Generation Partnership Project (3GPP), the specification of the PHYlayer in Release 17 New Radio access technology (NR) has been completed as functional extension of 5th Generation mobile communication systems (5G). NR supports functions for realizing Ultra Reliable and Low Latency Communication (URLLC) in addition to enhanced Mobile Broadband (eMBB) to satisfy requirements of high speed and high capacity (see, e.g., Non-Patent Literatures (hereinafter referred to as "NPLs") 1 to 6).

### Citation List

### Non-Patent Literature

### NPL 1

3GPP TS 38.211 V17.2.0, "NR; Physical channels and modulation (Release 17)," June 2022 NPL 2
3GPP TS 38.212 V17.2.0, "NR; Multiplexing and channel coding (Release 17)," June 2022 NPL 3
3GPP TS 38.213 V17.2.0, "NR; Physical layer procedure for control (Release 17)," June 2022

### NPL 4

3GPP TS 38.214 V17.2.0, "NR; Physical layer procedures for data (Release 17)," June 2022 NPL 5
3GPP TS 38.215 V17.1.0, "NR; Physical layer measurements (Release 17)," June 2022 NPL 6
3GPP TS 38.331 V17.1.0, "NR; Radio Resource Control (RRC) protocol specification (Release 17)", June 2022

### Summary of Invention

However, there is room for further study on indication method of resource allocation in a radio communication.

A non-limiting embodiment of the present disclosure contributes to providing a terminal, a base station, and a communication method each capable of appropriately performing indication of resource allocation.

A terminal according to an exemplary embodiment of the present disclosure includes: control circuitry, which, in operation, in a scheme in which a transmission direction is configured for each of a plurality of bands obtained by dividing a frequency band, performs determination of enabling and disabling of semi-static transmission and reception individually for each of the plurality of bands; and communication circuitry, which, in operation, performs transmission or reception of a signal in accordance with the determination of the enabling and the disabling.

It should be noted that general or specific embodiments may be implemented as a system, an apparatus, a method, an integrated circuit, a computer program, a storage medium, or any selective combination thereof.

According to an embodiment of the present disclosure, it is possible to appropriately perform indication of resource allocation.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

FIG. 1 illustrates examples of a Duplex system;
FIG. 2 illustrates an example of subband non-overlapping full duplex (SBFD);
FIG. 3 illustrates another example of SBFD;
FIG. 4 illustrates still another example of SBFD;
FIG. 5 is a block diagram illustrating an exemplary configuration of a part of a base station;
FIG. 6 is a block diagram illustrating an exemplary configuration of a part of a terminal;
FIG. 7 is a block diagram illustrating an exemplary configuration of the base station;
FIG. 8 is a block diagram illustrating an exemplary configuration of the terminal;
FIG. 9 is a sequence diagram illustrating exemplary operations of the base station and the terminal;
FIG. 10 illustrates an exemplary Downlink Control Information (DCI) format;
FIG. 11 illustrates an exemplary state for indicating enabling/disabling of semi-static transmission and reception;
FIG. 12 illustrates an exemplary relationship between a slot/symbol and a state;
FIG. 13 illustrates still another example of SBFD;
FIG. 14 illustrates an example of a slot format indicator (SFI);
FIG. 15 illustrates still another example of SBFD;
FIG. 16 illustrates another example of SFI;
FIG. 17 illustrates yet another example of SBFD;
FIG. 18 illustrates an exemplary architecture of a 3GPP NR system;
FIG. 19 is a schematic diagram illustrating functional split between Next Generation-Radio Access Network (NG-RAN) and 5th Generation Core (5GC);
FIG. 20 is a sequence diagram of a Radio Resource Control (RRC) connection setup/reconfiguration procedure;
FIG. 21 is a schematic diagram illustrating usage scenarios of enhanced Mobile BroadBand (eMBB), massive Machine Type Communications (mMTC), and Ultra Reliable and Low Latency Communications (URLLC); and
FIG. 22 is a block diagram illustrating an exemplary 5G system architecture for a non-roaming scenario.

### Description of Embodiments

Hereinafter, embodiments of the present disclosure will be described in detail with reference to the accompanying drawings.

### [Indication of Transmission Direction]

For example, the transmission direction of each symbol can be configured to Downlink (DL), Uplink (UL), or Flexible. Flexible can be used to overwrite either Downlink or Uplink, for example.

The configuration of the transmission direction of the symbol includes, for example, a Cell-specific UL/DL configuration configured in a semi-static manner, a UE-specific UL/DL configuration configured in a semi-static manner, and a Slot format indicator (SFI) configured in a dynamic manner.

The Cell-specific UL/DL configuration and the UE-specific UL/DL configuration, which are configured semi-statically, may be transmitted to a terminal (for example, UE: User Equipment) by higher layer signaling (for example, Radio Resource Control (RRC) signaling).

SFI may be transmitted to the terminal, for example, via a downlink control channel (for example, PDCCH: Physical Downlink Control Channel). For example, the downlink control information (DCI) used for transmission of the SFI may be in DCI format 2_0. The position and size of bit in a field on DCI format 2_0 in which the SFI is transmitted may be configured by RRC signaling.

Further, the field for SFI may be shared among a plurality of terminals (UEs). The slot format is a format that defines the transmission direction of each symbol in a slot, and slot formats of a plurality of slots may be transmitted in SFI.

### [Semi-Static Transmission and Reception]

Transmission and reception that is configured semi-statically (semi-static transmission/reception or configured transmission/reception) may be configured for a channel and a signal by RRC signaling.

For example, a semi-static transmission (for example, configured transmission) may be configured for an uplink data channel (for example, Physical Uplink Shared Channel (PUSCH)), an uplink control channel (for example, Physical Uplink Control Channel (PUCCH)), a random access channel (for example, Random Access Channel (RACH)), and a sounding reference signal (for example, Sounding Reference Signal (SRS)). For example, a Configured Grant (CG) is semi-static transmission configured for PUSCH.

Further, for example, semi-static reception (for example, configured reception) may be configured for a downlink data channel (for example, Physical Downlink Shared Channel (PDSCH)), a downlink control channel (PDCCH), and a reference signal for channel state information (for example, Channel State Information-Reference Signal (CSI-RS)). For example, Semi-persistent scheduling (SPS) is semi-static reception configured for PDSCH.

For example, the semi-static transmission and reception may be configured for a Flexible symbol that is configured semi-statically. In this case, a base station (for example, gNB) can control whether to cause the terminal to actually transmit and receive in the semi-static transmission and reception, using SFI. That is, the base station can control, by dynamic signaling, transmission and reception in the semi-static transmission and reception in the terminal.

Hereinafter, causing the semi-static transmission and reception to actually be performed will be referred to as "enabled," "allowed," or "requested." Further, causing the semi-static transmission and reception to not actually be performed is referred to as "disabled," "canceled," or "not requested."

For example, when "Uplink" or "255" is indicated to the terminal by SFI for a Flexible symbol that is configured semi-statically, the semi-static transmission may be enabled. Further, for example, when "Downlink" or "Flexible" is indicated to the terminal by the SFI for a Flexible symbol that is configured semi-statically, the semi-static transmission may be disabled.

Further, for example, when "Downlink" or "255" is indicated to the terminal by SFI for a Flexible symbol that is configured semi-statically, the semi-static reception may be enabled. Further, for example, in a case where "Uplink" or "Flexible" is indicated to the terminal by the SFI for a Flexible symbol that is configured semi-statically, the semi-static reception may be disabled.

Note that the slot format of the slot in which "255" is indicated by the SFI is based on a semi-static configuration. For example, in a slot in which "255" is indicated by the SFI, the transmission direction of each symbol may be configured based on the configuration of the Cell-specific UL/DL configuration and the UE-specific UL/DL configuration. At this time, the semi-static transmission and reception is enabled unless a transmission direction different from the semi-static configuration is scheduled by DCI.

Further, reception is enabled for PDCCH even on a symbol that is indicated as "Flexible" by SFI.

### [Subband non-overlapping full duplex (SBFD)]

"Study on evolution of NR duplex operation" was approved as a Study Item for Release 18. One of the main topics of the Study Item is the support for subband non-overlapping full duplex (also referred to as SBFD or Cross Division Duplex (XDD)).

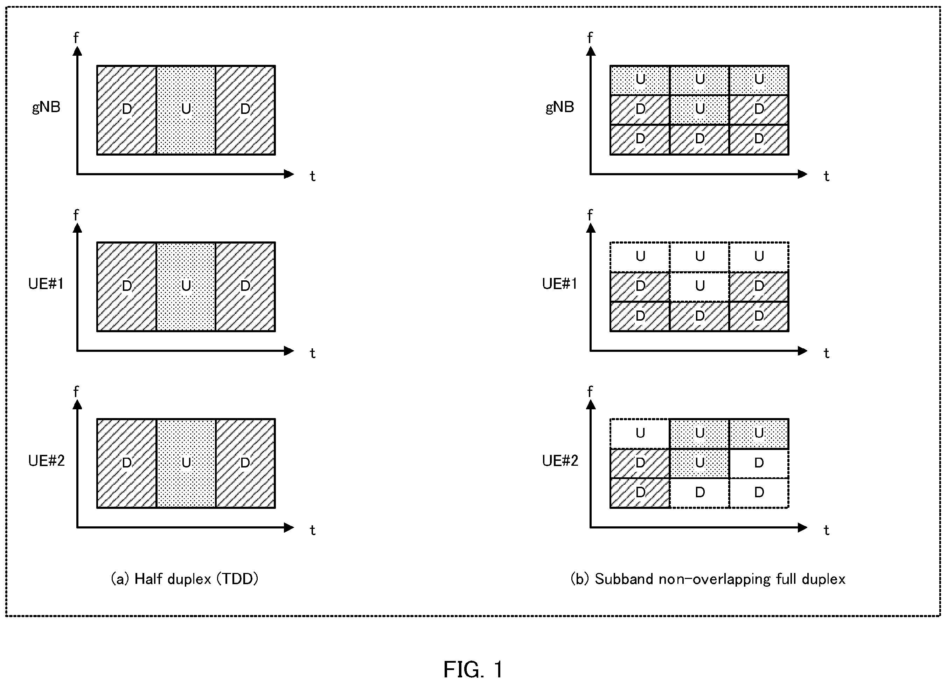

FIG. 1 illustrates, in (a) and (b), examples of a Duplex system. In (a) and (b) of FIG. 1, the vertical axis represents frequency, and the horizontal axis represents time. Further, "U" indicates uplink transmission and "D" indicates downlink transmission in (a) and (b) of FIG. 1.

FIG. 1 illustrates in (a) an example of Time Division Duplex (TDD) in half duplex. In (a) of FIG. 1, UE #1 and UE #2 are terminals connected to a base station (for example, gNB). In the half duplex illustrated in (a) of FIG. 1, a transmission direction in a certain time resource may be common between the base station and the terminals. For example, the transmission direction is not different between terminals in a certain time resource.

FIG. 1 illustrates in (b) an example of SBFD. In SBFD, a frequency resource (or frequency band) is divided into a plurality of bands (also referred to as, for example, subbands, RB sets, subbandwidths, or subBWPs (Bandwidth parts)), and supports transmission in different directions (for example, downlink or uplink) in subband units. Note that, in SBFD, the terminal performs transmission and reception in either uplink or downlink in a certain time resource, and does not perform transmission and reception in the other. In contrast, in SBFD, the base station can simultaneously transmit and receive both in uplink and downlink. Note that there may be a case where the terminal does not use a resource in the transmission direction in a certain time resource (for example, resource indicated by dotted line in (b) of FIG. 1).

### [Semi-Static Transmission and Reception in SBFD]

A method for achieving SBFD includes, for example, a method for utilizing a Flexible symbol that is configured semi-statically.

The Flexible symbol that is configured semi-statically can be, for example, either an Uplink symbol or a Downlink symbol by SFI, and SBFD can be thus achieved by the base station indicating different transmission directions to different terminals.

By utilizing the Flexible symbol that is configured semi-statically, the terminal can operate SBFD without knowing the time and frequency resource of a subband (for example, SBFD can be achieved in transparent manner). For example, the transparent control of SBFD enables the base station to select whether to apply SBFD (for example, whether to allocate subband to symbol) depending on the communication environment (for example, traffic load in DL and UL, necessity of coverage in uplink, requirement for latency, and the like), and thus, the degree of freedom in scheduling can be improved, and the resource utilization efficiency can be improved.

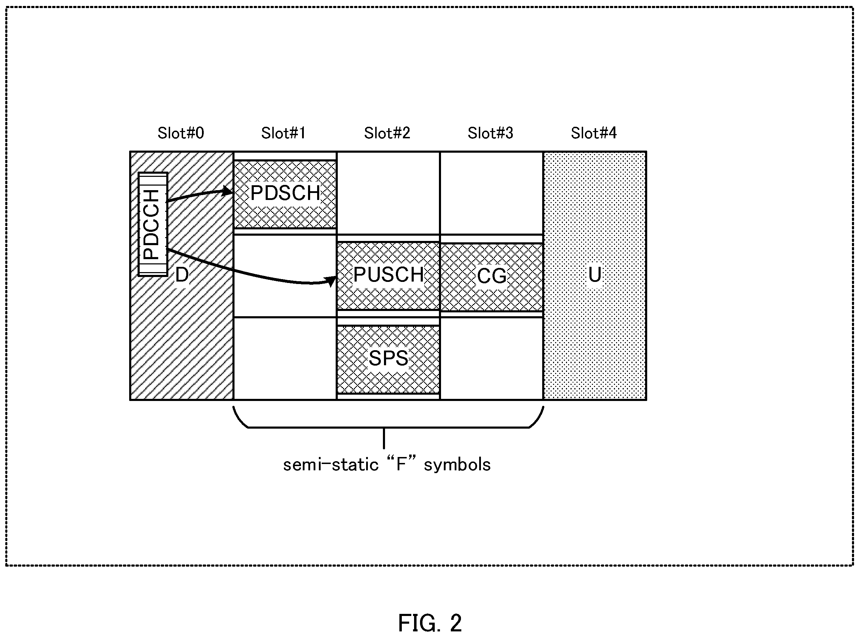

FIG. 2 illustrates an example in which SBFD is applied to a Flexible symbol that is configured semi-statically. In FIG. 2, a Flexible symbol is semi-statically configured for Slots #1, #2, and #3. PDSCH in Slot #1 and PUSCH in Slot #2 are dynamically scheduled using PDCCH (or DCI). Further, an operation based on the Semi-persistent scheduling (SPS) in Slot #2 (for example, also referred to as SPS reception) is the semi-static reception, and SPS uses PDSCH. Further, an operation based on the Configured Grant (CG) in Slot #3 (for example, also referred to as CG transmission) is the semi-static transmission, and CG uses PUSCH.

As described above, the operation of SBFD can be achieved by using the dynamic scheduling and the semi-static configuration on the Flexible symbol that is configured semi-statically.

### [Enabling/Disabling Semi-Static Transmission and Reception in SBFD]

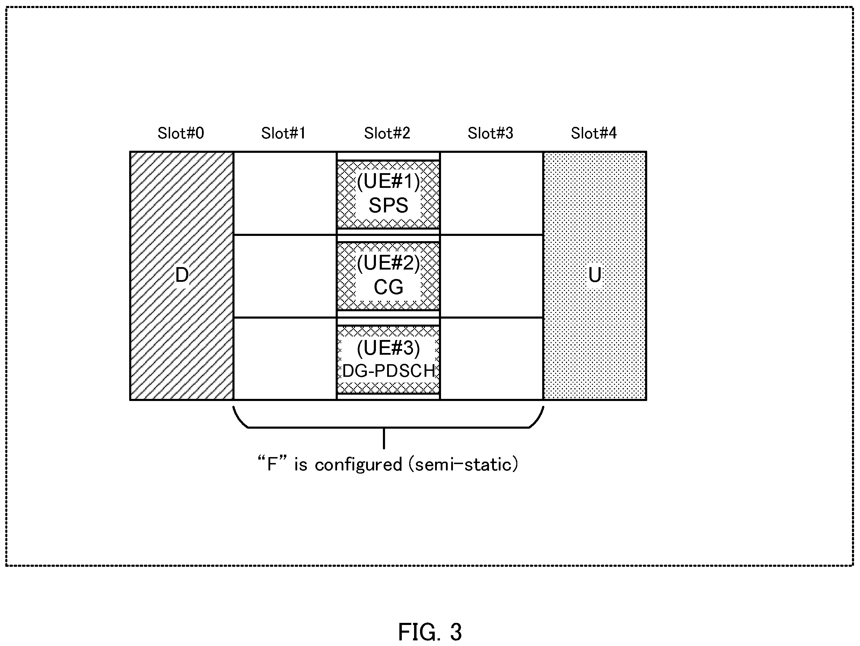

In a case where the semi-static transmission and reception is used in SBFD, there may be a case where the semi-static transmission and reception cannot be correctly enabled/disabled. Hereinafter, an example will be described with the configuration illustrated in FIG. 3 as a precondition.

In FIG. 3, a Flexible symbol is configured for Slots #1, #2, and #3 semi-statically. Further, in Slot #2 in FIG. 3, SPS reception for UE #1 and CG transmission for UE #2 are configured semi-statically. Further, in Slot #2 in FIG. 3, reception of a dynamically-scheduled PDSCH (DG-PDSCH: Dynamic grant PDSCH) by PDCCH for UE #3 is configured. Here, UE #1, UE #2, and UE #3 are configured to monitor the same DCI format 2_0 (for example, the same SFI).

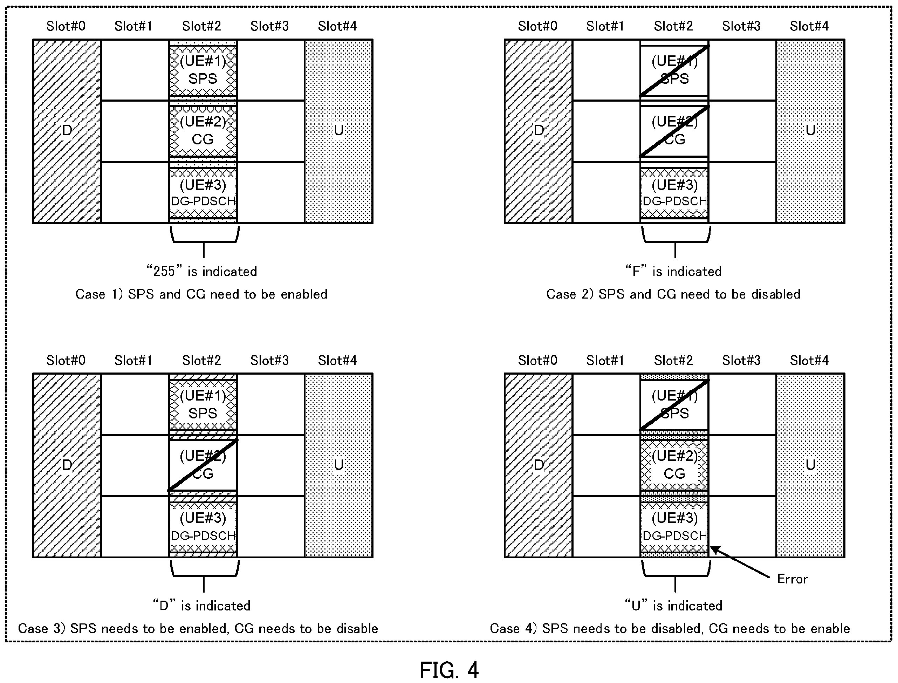

In a case where the enabling/disabling of the semi-static transmission and reception is applied to the precondition illustrated in FIG. 3, at least the following four cases (for example, FIG. 4) are possible.

### (Case 1) Where both SPS and CG are enabled

The enabling of both SPS and CG can be achieved by indicating "255" by SFI. When "255" is indicated to the terminal by the SFI, the transmission direction of the symbol becomes a Flexible symbol in accordance with the UL/DL configuration configured semi-statically. Thus, in this case, the semi-static transmission and reception is enabled unless a transmission direction different from the semi-static transmission and reception is scheduled by DCI. Further, in the Flexible symbol, the transmission and reception that are dynamically scheduled are enabled, and thus, the terminal can receive DG-PDSCH. That is, the indication of "255" by the SFI does not affect the DG-PDSCH reception.

### (Case 2) Where both SPS and CG are disabled

The disabling of both SPS and CG can be achieved by indicating "Flexible" by SFI. When "Flexible" is indicated to the terminal by the SFI, the semi-static transmission and reception is disabled. Further, in the Flexible symbol, the transmission and reception that are dynamically scheduled are enabled, and thus, the terminal can receive DG-PDSCH. That is, the indication of "Flexible" by the SFI does not affect the DG-PDSCH reception.

### (Case 3) Where SPS is enabled and CG is disabled

The enabling of SPS and the disabling of CG can be achieved by indicating "Downlink" by SFI. When "Downlink" is indicated to the terminal by the SFI, the semi-static reception is enabled, and the semi-static transmission is disabled. In a Downlink symbol, the terminal can perform reception in downlink, and thus, can receive DG-PDSCH. That is, the indication of "Downlink" by the SFI does not affect the DG-PDSCH reception.

### (Case 4) Where SPS is disabled and CG is enabled

The disabling of SPS and the enabling of CG can be achieved by indicating "Uplink" by SFI. When "Uplink" is indicated to the terminal by the SFI, the semi-static reception is disabled and the semi-static transmission is enabled, and thus, the disabling of SPS and the enabling of CG can be achieved, while the DG-PDSCH reception is affected. For example, when "Uplink" is indicated to the terminal by the SFI, the terminal does not assume reception in downlink in the Uplink symbol, and thus, the indication of the DG-PDSCH reception is regarded as an error. For this reason, with the above-described method for enabling/disabling the semi-static transmission and reception using the SFI, SBFD cannot be controlled in Case 4.

An example of applying the enabling/disabling of the semi-static transmission and reception using SFI has been described, thus far.

As described above, there are cases where the enabling/disabling of the semi-static transmission and reception using SFI does not function sufficiently in SBFD. Note that the above example is merely exemplary, and there may be cases of insufficient functionality depending on a combination of the semi-static transmission and reception and the dynamically-indicated transmission and reception.

In one non-limiting and exemplary embodiment of the present disclosure, a description will be given of a method for achieving the enabling/disabling of the semi-static transmission and reception in SBFD by, for example, using an indication associated with a Slot format or SFI.

### [Overview of Communication System]

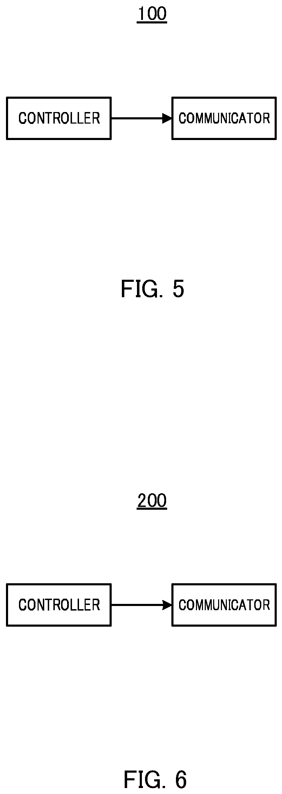

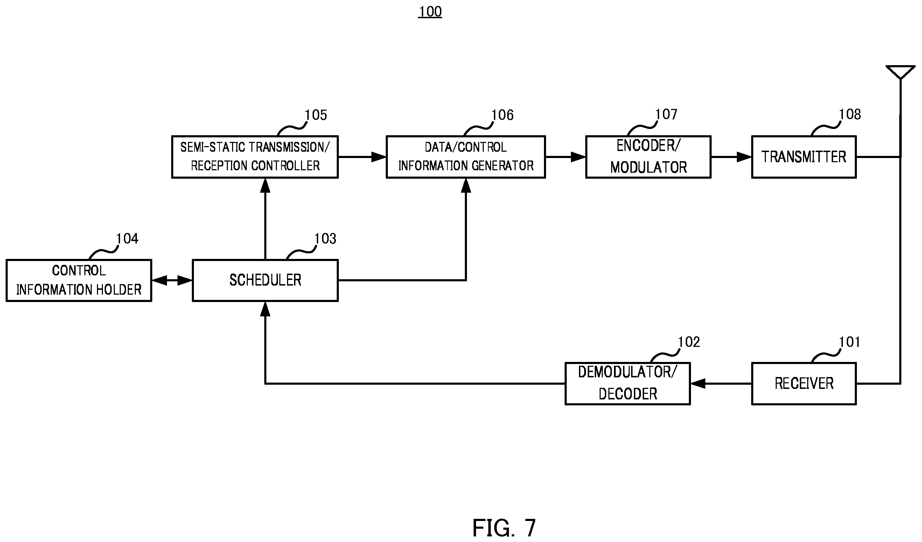

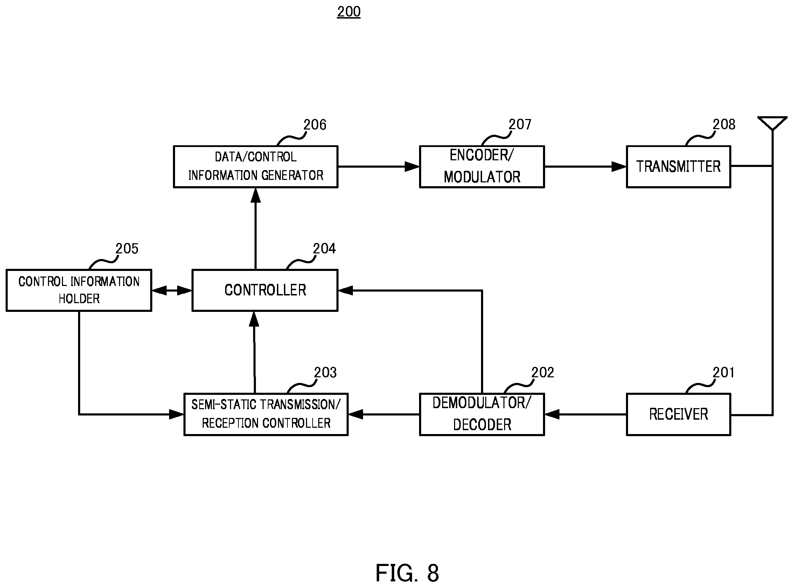

A communication system according to an aspect of the present disclosure may include, for example, base station 100 (for example, gNB) illustrated in FIGS. 5 and 7 and terminal 200 (for example, UE) illustrated in FIGS. 6 and 8. The communication system may include a plurality of base stations 100 and a plurality of terminals 200.

FIG. 5 is a block diagram illustrating an exemplary configuration of a part of base station 100 according to an aspect of the present disclosure. In base station 100 illustrated in FIG. 5, a controller (corresponding to, for example, control circuitry), in a scheme (for example, SBFD) in which a transmission direction is configured for each of a plurality of bands obtained by dividing a frequency band, performs decision of enabling and disabling of semi-static transmission and reception performed by terminal 200, individually for each of the plurality of bands (for example, Subbands). A communicator (corresponding to, for example, communication circuitry) receives or transmits a signal in accordance with the decision of the enabling and the disabling.

FIG. 6 is a block diagram illustrating an exemplary configuration of a part of terminal 200 according to an aspect of the present disclosure. In terminal 200 illustrated in FIG. 6, a controller (corresponding to, for example, control circuitry), in a scheme (for example, SBFD) in which a transmission direction is configured for each of a plurality of bands obtained by dividing a frequency band, performs determination of enabling and disabling of semi-static transmission and reception individually for each of the plurality of bands (for example, Subbands). A communicator (for example, corresponding to communication circuitry) transmits or receives a signal in accordance with the determination of the enabling and the disabling.

### [Configuration of Base Station]

FIG. 7 is a block diagram illustrating an exemplary configuration of base station 100 according to an aspect of the present disclosure. In FIG. 7, base station 100 includes receiver 101, demodulator/decoder 102, scheduler 103, control information holder 104, semi-static transmission/reception controller 105, data/control information generator 106, encoder/modulator 107, and transmitter 108.

Note that, for example, at least one of demodulator/decoder 102, scheduler 103, control information holder 104, semi-static transmission/reception controller 105, data/control information generator 106, and encoder/modulator 107 may be included in the controller illustrated in FIG. 5, and at least one of receiver 101 and transmitter 108 may be included in the communicator illustrated in FIG. 5.

For example, receiver 101 performs reception processing such as down-conversion and/or A/D conversion on a received signal received via an antenna, and outputs the received signal after the reception processing to demodulator/decoder 102.

For example, demodulator/decoder 102 demodulates and decodes the received signal (e.g., uplink signal) input from receiver 101 and outputs a decoding result to scheduler 103.

Scheduler 103 may perform scheduling for terminal 200, for example. For example, scheduler 103 performs scheduling of transmission and reception performed by each terminal 200, based on at least one of the decoding result input from demodulator/decoder 102 and control information input from control information holder 104, and then indicates generation of at least one of data and control information to data/control information generator 106. Further, for example, scheduler 103 outputs information on scheduling to semi-static transmission/reception controller 105. Furthermore, scheduler 103 may output control information on scheduling for terminal 200 to control information holder 104.

Control information holder 104 holds the control information configured for each terminal 200, for example. The control information may include, for example, information on the semi-static transmission and reception for each terminal 200 (for example, information on time and frequency resource for transmission and reception). For example, control information holder 104 may output the held information to each component (for example, scheduler 103) of base station 100 as necessary.

Semi-static transmission/reception controller 105 may, for example, indicate, to data/control information generator 106, generation of control information for enabling and disabling the semi-static transmission and reception, based on the information from scheduler 103.

For example, data generator 106 generates at least one of data and control information in accordance with the indication from scheduler 103 and outputs a signal including the generated data or control information to encoder/modulator 107. Further, for example, data/control information generator 106 generates control information for enabling and disabling the semi-static transmission and reception in accordance with the indication from semi-static transmission/reception controller 105, and then outputs a signal including the generated control information to encoder/modulator 107. Note that the generated data and control information may include at least one of higher-layer signaling information and downlink control information.

Encoder/modulator 107, for example, encodes and modulates a signal input from data/control information generator 106 (for example, data, control information, or information on enabling and disabling of semi-static transmission and reception is included), and then outputs the modulated signal to transmitter 108.

Transmitter 108 performs transmission processing such as D/A conversion, up-conversion, or amplification on the signal input from encoder/modulator 107, for example, and transmits a radio signal obtained by the transmission processing to terminal 200 through the antenna.

### [Configuration of Terminal]

FIG. 8 is a block diagram illustrating an exemplary configuration of terminal 200 according to an aspect of the present disclosure. In FIG. 8, terminal 200 includes receiver 201, demodulator/decoder 202, semi-static transmission/reception controller 203, controller 204, control information holder 205, data/control information generator 206, encoder/modulator 207, and transmitter 208.

Note that, for example, at least one of demodulator/decoder 202, semi-static transmission/reception controller 203, controller 204, control information holder 205, data/control information generator 206, and encoder/modulator 207 may be included in the controller illustrated in FIG. 6, and at least one of receiver 201 and transmitter 208 may be included in the communicator illustrated in FIG. 6.

For example, receiver 201 performs reception processing such as down-conversion or A/D conversion on the received signal received via the antenna, and outputs the received signal after the reception processing to demodulator/decoder 202.

For example, control information demodulator/decoder 202 demodulates and decodes the received signal input from receiver 201 and outputs a decoding result to controller 204. The decoding result may include, for example, higher-layer signaling information and downlink control information. Further, in a case where the decoding result includes information on enabling and disabling of the semi-static transmission/reception (for example, slot format information), demodulator/decoder 202 outputs the decoding result to semi-static transmission/reception controller 203.

Semi-static transmission/reception controller 203, for example, determines (or identifies, specifies) the enabling and disabling of the semi-static transmission and reception based on information on the enabling and disabling of the semi-static transmission and reception input from demodulator/decoder 202 and control information (for example, information on time resource for semi-static transmission and reception) input from control information holder 205, and then outputs a determination result (for example, information on enabling and disabling of semi-static transmission and reception in slot) to controller 204.

Controller 204 may determine whether to transmit and/or receive data or control information, based on the information on the enabling and disabling of the semi-static transmission and reception input from semi-static transmission/reception controller 203, the control information (for example, information on time and frequency resource for semi-static transmission and reception) input from control information holder 205, or the decoding result (for example, data or control information) input from demodulator/decoder 202. Controller 204 may, for example, in a case where the determination result indicates that the data or the control information is to be received, indicate reception of at least one of the data and the control information to receiver 201 and demodulator/decoder 202 (not illustrated). Further, for example, in a case where the determination result indicates that the data or the control information is to be transmitted, controller 204 may indicate generation of at least one of the data and the control information to data/control information generator 206.

Control information holder 205, for example, holds the control information input from controller 204 and then outputs the held information to each component (for example, semi-static transmission/reception controller 203 and controller 204) as necessary.

Data/control information generator 206, for example, generates data or control information in accordance with the indication from controller 204, and outputs a signal including the generated data or control information to encoder/modulator 207.

Encoder/modulator 207 encodes and modulates, for example, the signal input from data/control information generator 206 and outputs the modulated transmission signal to transmitter 208.

Transmitter 208 performs transmission processing such as D/A conversion, up-conversion, and/or amplification on the signal input from encoder/modulator 207, for example, and transmits a radio signal obtained by the transmission processing through the antenna to base station 100.

### [Operations of Base Station 100 and Terminal 200]

Exemplary operations of base station 100 and terminal 200 having the above configurations will be described.

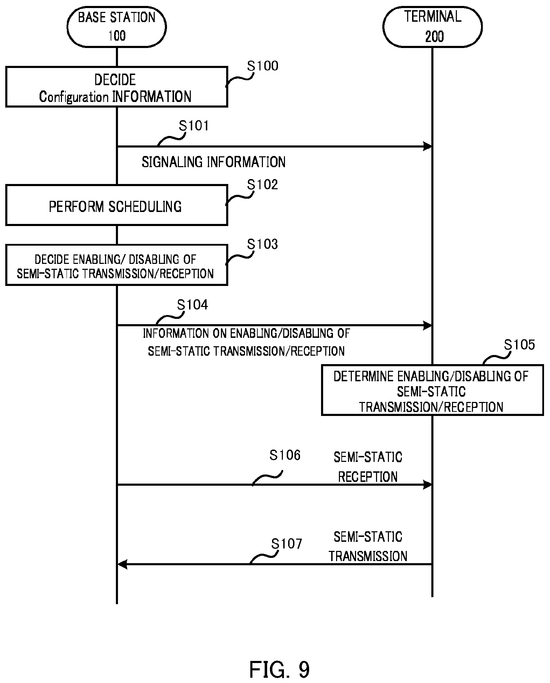

FIG. 9 is a sequence diagram illustrating exemplary operations of base station 100 and terminal 200.

In FIG. 9, base station 100 decides information on configuration such as, for example, configuration of a semi-static transmission direction (for example, semi-static UL/DL configuration) and configuration of the semi-static transmission and reception (for example, resource and period) (S100).

Base station 100 transmits, to terminal 200, higher-layer signaling information including the decided configuration information, for example (S101).

Base station 100 performs scheduling of data transmission and reception for terminal 200, for example (S102).

Base station 100 decides, for example, the enabling and disabling of the semi-static transmission and reception (S103). Base station 100 may, for example, decide the enabling and disabling of the semi-static transmission and reception performed by terminal 200, individually for each of a plurality of subbands in SBFD. Base station 100 may transmit, to terminal 200, information on the decided enabling and disabling of the semi-static transmission and reception, for example (S104).

Terminal 200 determines the enabling and disabling of the semi-static transmission and reception, based on the information on the enabling and disabling of the semi-static transmission and reception from base station 100, for example (S105). Terminal 200 may determine the enabling and disabling of the semi-static transmission and reception individually for each of the plurality of subbands in SBFD, for example.

Terminal 200 may perform semi-static reception, for example, when the semi-static reception is enabled (S106). Further, terminal 200 may perform semi-static transmission, for example, when the semi-static transmission is enabled (S107).

### [Method for Enabling/Disabling Semi-Static Transmission and Reception]

A method for deciding the enabling and disabling (hereinafter, also referred to as enabling/disabling) of the semi-static transmission and reception in base station 100 (for example, scheduler 103 and semi-static transmission/reception controller 105) will be described.

Note that terminal 200 (for example, semi-static transmission/reception controller 203 and controller 204) may determine the enabling and disabling of the semi-static transmission/reception, assuming the decision made by base station 100 on the enabling and disabling of the semi-static transmission/reception, for example.

Hereinafter, an example of a method for enabling/disabling the semi-static transmission and reception will be described.

### [Method 1]

In Method 1, base station 100 performs indication of the enabling/disabling of the semi-static transmission and reception using information (for example, "state") indicating a state in which the enabling/disabling of the semi-static transmission and reception is configured. Terminal 200 determines either the enabling or the disabling of the semi-static transmission and reception, based on the information (state) indicating either the enabling or the disabling of the semi-static transmission and reception, for example.

The state may be indicated to terminal 200 using, for example, a field of a group-common PDCCH (or a group-common DCI). Further, the position and size (for example, bit position, number of bits) of the state field on the group common PDCCH may be configured by signaling. Further, SFI to which a state (for example, configuration of enabling/disabling of semi-static transmission and reception) is applied (for example, which SFI state is applied to) may be configured by signaling.

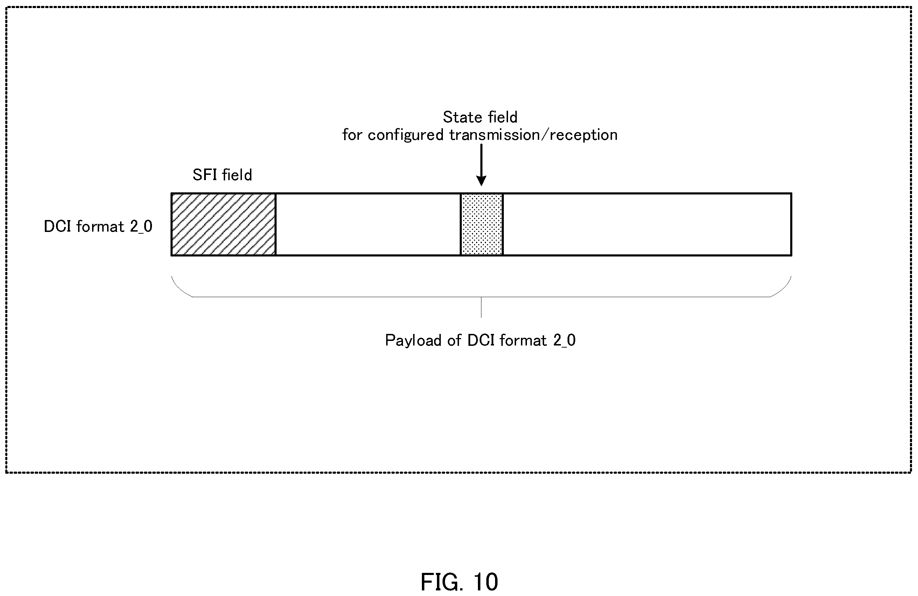

For example, the SFI to which a state is applied and the state may be transmitted simultaneously. For example, the SFI and state may be simultaneously arranged on DCI format 2_0 and transmitted. Here, an existing SFI may be utilized for SFI. FIG. 10 illustrates an example of indicating a state using DCI format 2_0. A field of a state is provided in the payload of DCI format 2_0 illustrated in FIG. 10.

A value of the state corresponds to either a status of enabling or a status of disabling of the semi-static transmission and reception. For example, the state may be applied to the semi-static transmission and reception and need not be applied to other transmission and reception. For example, transmission and reception dynamically indicated by DCI or the like may not be affected by the state.

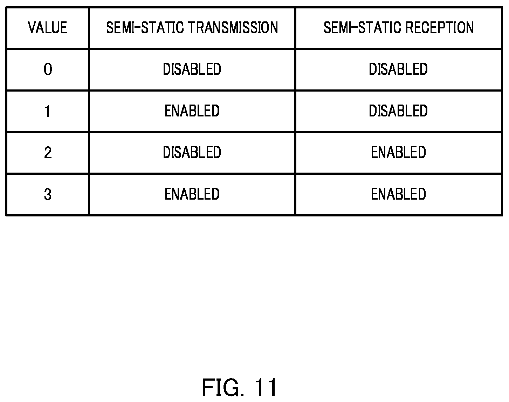

FIG. 11 illustrates an exemplary relationship between the value of the state and the status of the enabling/disabling of the semi-static transmission and semi-static reception. In the example illustrated in FIG. 11, the state is composed of a 2-bit bit field and indicates the enabling/disabling of each of the semi-static transmission and the semi-static reception in four statuses. Note that 1 bit may be allocated to each of the semi-static transmission and the semi-static reception in order to make separate bit fields.

For example, the slot or symbol that is a target for the enabling/disabling of the semi-static transmission and reception using the state may be determined and applied based on any of the following Application Methods 1 to 4.

### <Application Method 1>

In Application Method 1, the state may be applied to a symbol in a slot in which the slot format is indicated by SFI, regardless of the transmission direction. For example, in Application Method 1, the state may be applied to all of the Downlink, Uplink, and Flexible symbols.

Note that, in Application Method 1, the following rules may be applied.

Rule 1: The enabling/disabling of the semi-static transmission is applied to an Uplink or Flexible symbol. For example, the semi-static transmission need not be applied to a Downlink symbol. For example, the semi-static transmission is always disabled in the Downlink symbol.

Rule 2: The enabling/disabling of the semi-static reception is applied to a Downlink or Flexible symbol. For example, the semi-static reception need not be applied to an Uplink symbol. For example, the semi-static reception is always disabled in the Uplink symbol.

Applying the state to all slots and symbols in which the slot format is indicated by SFI makes it possible to control the enabling/disabling of the semi-static transmission and reception on a Flexible symbol, as well as on a Downlink symbol and an Uplink symbol.

Such control achieves the enabling/disabling of the semi-static transmission and reception on a Flexible symbol in SBFD. Further, since the enabling/disabling of the semi-static transmission and reception can be controlled even in a Downlink symbol and an Uplink symbol, it is possible to improve the degree of freedom in scheduling and improve the resource utilization efficiency. For example, when there is no traffic for a certain terminal 200, base station 100 can allocate resources to another terminal 200, thereby improving the resource utilization efficiency.

### <Application Method 2>

In Application Method 2, the state may be applied to a Flexible symbol in a slot in which the slot format is indicated by SFI.

In a case where the processing of SBFD is performed on a Flexible symbol, the state is applied to the Flexible symbol, thereby the enabling/disabling of the semi-static transmission and reception can be achieved without affecting operations of existing symbols.

As described above, Application Method 2 makes it possible to achieve the enabling/disabling of the semi-static transmission and reception on a Flexible symbol in SBFD.

### <Application Method 3>

In Application Method 3, the state is applied to a symbol in a slot in which "255" is indicated by SFI.

The state may be applied to a Flexible symbol that is semi-statically configured in a slot in which "255" is indicated, or may be applied to all symbols in a slot in which "255" is indicated. In the latter case, Rule 1 and Rule 2 of Application Method 1 may be applied.

As described above, in a slot in which "255" is indicated by SFI, Application Method 3 makes it possible to achieve the enabling/disabling of the semi-static transmission and reception on a Flexible symbol in SBFD. Further, when the state is applied to all symbols, the control on the enabling/disabling of the static transmission and reception can be performed even in a Downlink symbol and an Uplink symbol.

### <Application Method 4>

In Application Method 4, a slot format for applying the state is introduced, and the state is applied to a symbol in a slot in which the introduced slot format is indicated.

For example, "254" may be added as a new slot format. Note that "254" is an example, and other values may be used.

When "254" is indicated by SFI, the transmission direction of each symbol may be determined based on the semi-statically configured UL/DL configuration. Further, in a slot in which "254" is indicated by the SFI, the enabling/disabling of the semi-static transmission and reception may be determined depending on the state.

For example, the difference between the values of SFI, that is between the existing "255" and "254" added in Application Method 4, is whether the enabling/disabling of the semi-static transmission and reception is determined by the state.

For example, the state may be applied to a Flexible symbol that is configured semi-statically in a slot in which "254" is indicated by the SFI, or may be applied to all symbols in the slot in which "254" is indicated by the SFI. In the latter case, Rule 1 and Rule 2 of Application Method 1 may be applied.

As described above, in a slot in which "254" is indicated by SFI, Application Method 4 makes it possible to achieve the enabling/disabling of the semi-static transmission and reception on a Flexible symbol in SBFD. Further, when the state is applied to all symbols, the control on the enabling/disabling of the static transmission and reception can be performed even in a Downlink symbol and an Uplink symbol.

The Application Methods 1 to 4 of the state have been each described, thus far.

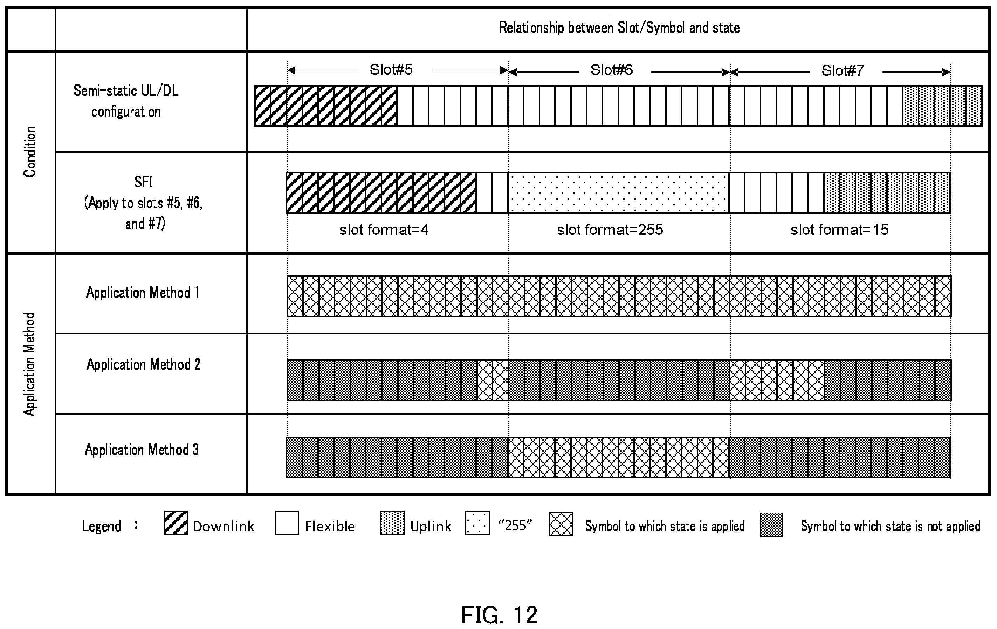

FIG. 12 illustrates an example in which the state is applied using Application Methods 1 to 3.

In FIG. 12, the first and second columns represent the conditions, and the third to fifth columns represent the results when Application Methods 1 to 3 are applied, respectively. In the first column, the transmission direction of each symbol based on the semi-static UL/DL configuration. For each symbol, one of the transmission directions of Downlink, Flexible, and Uplink is configured semi-statically. In the second column, the indication of the transmission direction by SFI. In the example of FIG. 12, the SFI for Slots #5, #6, and #7 is indicated. Note that "Slot format" 255 is applied to all symbols in the slots.

The third column, fourth column, and fifth column of FIG. 12 illustrate the symbols to which the state is applied in Application Method 1, Application Method 2, and Application Method 3, respectively. Note that Application Method 4 is omitted because SFI is indicated in slot units in the same manner as in Application Method 3, and the result is similar to that in Application Method 3.

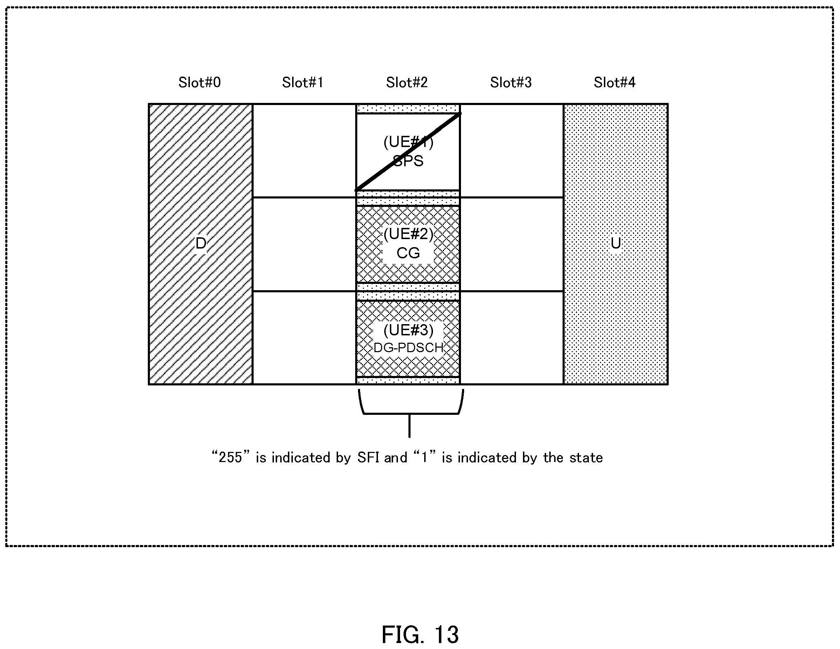

FIG. 13 illustrates an example of applying Method 1 to Case 4 (see, for example, FIG. 4). In FIG. 13, Application Method 1 is used as an example of the application method of the state. Further, the relationship between the value of the state and the enabling/disabling of the semi-static transmission and reception will be described with reference to FIG. 11.

As illustrated in FIG. 13, in order to meet the conditions of Case 4 (where SPS is disabled and CG is enabled), base station 100 configures "255" for Slot #2 by SFI and configures "1" (semi-static transmission: enabled, semi-static reception: disabled) by the state. Thus, in FIG. 13, for Slot #2 in which "255" is indicated by the SFI, the semi-static transmission is enabled, and the semi-static reception is disabled. Thus, in FIG. 13, SPS in UE #1 is disabled, and CG in UE #2 is enabled. Further, in a semi-static Flexible symbol in a slot in which "255" is indicated by the SFI, the reception of DG-PDSCH is enabled, and thus, the reception of DG-PDSCH in UE #3 is not affected. Thus, Method 1 makes it possible to achieve an operation that meets the conditions of Case 4.

As described above, in Method 1, base station 100 and terminal 200 configure either the enabling or disabling of the semi-static transmission and reception based on the state that indicates either the enabling or the disabling of each of the semi-static transmission and the semi-static reception. The enabling/disabling of the semi-static transmission and reception in SBFD is thereby achieved. The achievement of the enabling/disabling of the semi-static transmission and reception makes it possible to improve the degree of freedom in scheduling and to improve the resource utilization efficiency.

Further, in Method 1, application of the state eliminates the need to change the definition and indication method of an existing SFI, and thus, the enabling/disabling of the semi-static transmission and reception can be achieved without affecting the existing operation.

### [Method 2]

In Method 2, the enabling/disabling of the semi-static transmission and reception is configured using a specific slot format. For example, a specific slot format may correspond to either the enabling or the disabling of the semi-static transmission and reception.

In Method 2, base station 100 performs indication of the enabling/disabling of the semi-static transmission and reception using a slot format corresponding to either the enabling or the disabling of the semi-static transmission and reception. Terminal 200 determines either the enabling or the disabling of the semi-static transmission and reception based on the slot format corresponding to either the enabling or the disabling of the semi-static transmission and reception, for example.

For example, the following slot formats may be introduced.

New slot format 1: For the slot that has been configured, the semi-static reception and transmission/reception dynamically scheduled by DCI or the like are enabled, while the semi-static transmission is disabled. In new slot format 1, the transmission direction of each symbol may be configured based on the UL/DL configuration that is configured semi-statically, as in "255."

New slot format 2: For the slot that has been configured, the semi-static transmission and dynamically scheduled transmission/reception by DCI or the like are enabled, while the semi-static reception is disabled. In new slot format 2, the transmission direction of each symbol may be configured based on the UL/DL configuration that is set semi-statically, as in "255."

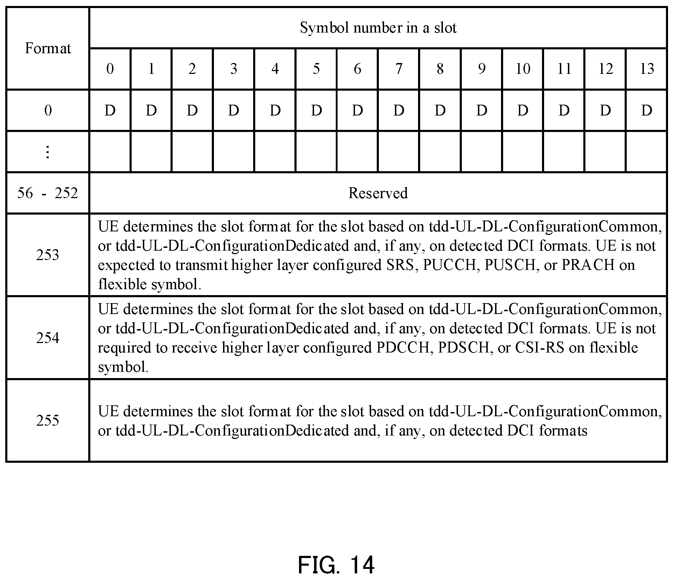

The new slot formats 1 and 2 may both be added to SFI, or only one of them may be added to SFI. FIG. 14 illustrates an example in which new slot formats 1 and 2 are added to SFI. Note that FIG. 14 is based on TS38.213 Table 11.1.1-1. In FIG. 14, new slot format 1 is added as "253," and new slot format 2 is added as "254." Note that, in SFI, "253" and "254" are indices that are not used as "reserved" in the existing slot formats. "253" and "254" illustrated in FIG. 14 are examples, and a new slot format may be allocated to another index.

In the example illustrated in FIG. 14, "253" may be used in a case where the semi-static transmission is disabled, and "254" may be used in a case where the semi-static reception is disabled. Further, in a case where both the semi-static transmission and the semi-static reception are enabled, "255" may be used.

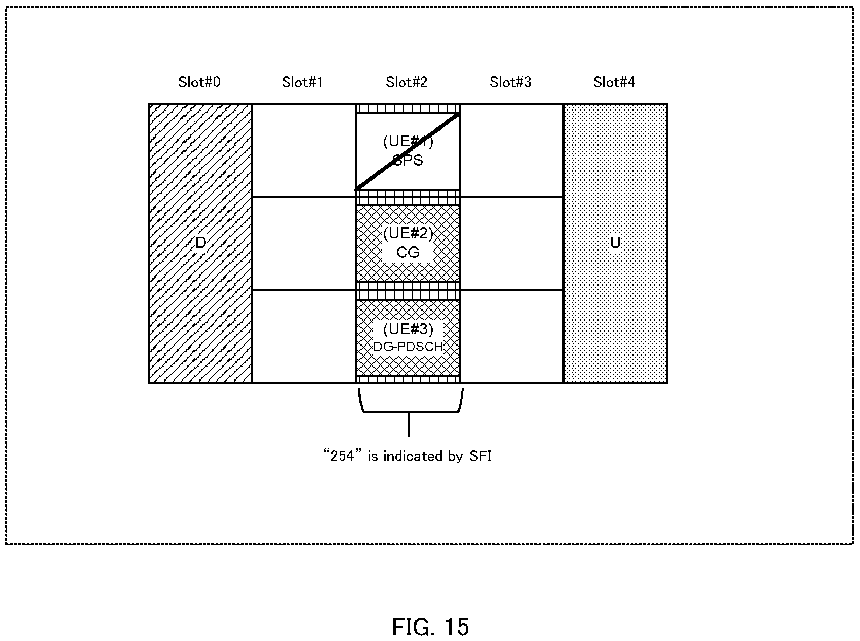

FIG. 15 illustrates an example of applying Method 2 to Case 4 (see, for example, FIG. 4).

As illustrated in FIG. 15, in order to meet the conditions of Case 4 (where SPS is disabled and CG is enabled), base station 100 configures "254" for Slot #2 using SFI. Thus, in FIG. 15, for Slot #2 in which "254" is indicated by the SFI, the semi-static transmission is enabled, and the semi-static reception is disabled. Thus, in FIG. 15, SPS in UE #1 is disabled, and CG in UE #2 is enabled. Further, in a semi-static Flexible symbol in a slot in which "254" is indicated by the SFI, the reception of DG-PDSCH is enabled, and thus, the reception of DG-PDSCH in UE #3 is not affected. Thus, Method 2 makes it possible to achieve an operation that meets the conditions of Case 4.

As described above, in Method 2, base station 100 and terminal 200 configure either the enabling or disabling of the semi-static transmission and reception based on the slot format indicates either the enabling or the disabling of each of the semi-static transmission and the semi-static reception. The enabling/disabling of the semi-static transmission and reception in SBFD is thereby achieved. The achievement of the enabling/disabling of the semi-static transmission and reception makes it possible to improve the degree of freedom in scheduling and to improve the resource utilization efficiency.

Further, in Method 1, the enabling/disabling of the semi-static transmission and reception is uniformly applied to a plurality of slots indicated by SFI, whereas in the new slot format of Method 2, the enabling and disabling are configured (or designated) in slot units. For this reason, in Method 2, the degree of freedom in scheduling can be further improved.

### [Method 3]

In Method 3, the enabling/disabling of the semi-static transmission and reception is configured using a specific slot format. For example, a specific Slot format may correspond to either the enabling or the disabling of the semi-static transmission and reception. Although Method 2 has given a description of the case where the enabling/disabling of the semi-static transmission and reception is configured in slot units, in Method 3, a description will be given of a method for configuring the enabling/disabling of the semi-static transmission and reception in symbol units.

In Method 3, base station 100 performs indication of the enabling/disabling of the semi-static transmission and reception using a slot format corresponding to either the enabling or the disabling of the semi-static transmission and reception. Terminal 200 determines either the enabling or the disabling of the semi-static transmission and reception based on the slot format corresponding to either the enabling or the disabling of the semi-static transmission and reception, for example.

For example, the following symbol types may be introduced.

New Symbol Type 1: The semi-static reception and transmission/reception dynamically scheduled by DCI or the like are enabled, while the semi-static transmission is disabled. In the following description, this type will be denoted by "C_{D}."

New Symbol Type 2: The transmission and reception dynamically scheduled by DCI or the like are enabled, while the semi-static reception is disabled. In the following description, this type will be denoted by "C_{U}."

The new symbol types may both be introduced, or only one of them may be introduced.

For example, "C_{D}" may be regarded as a symbol type in which the semi-static transmission is restricted with respect to "F" (Flexible symbol). Further, "C_{U}" may be regarded as a symbol type in which semi-static reception is restricted with respect to "F" (Flexible symbol).

Further, the symbol type may be overwritten with respect to "C_{D}" and "C_{U}." For example, "D" (Downlink symbol) and "U" (Uplink symbol) that are configured semi-statically cannot be overwritten with the symbol types in "C_{D}" and "C_{U}." Further, the "F" (Flexible symbol) that is configured semi-statically can be overwritten with "C_{D}" or "C_{U}."

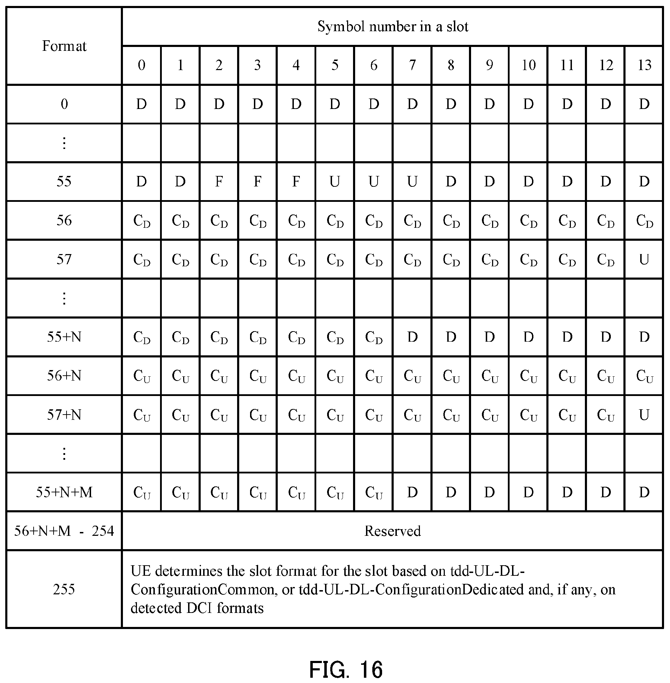

FIG. 16 illustrates an exemplary slot format to which "C_{D}" and "C_{U}" are added. FIG. 16 is based on TS38.213 Table 11.1.1-1 and corresponds to a slot format to which indices = 56 to 55+N+M are added. letter "N" in FIG. 16 indicates the number of slot formats added for "C_{D}," and letter "M" indicates the number of slot formats added for "C_{U}."

"C_{D}" and "C_{U}" are, for example, symbol types in which the semi-static transmission or semi-static reception is restricted with respect to a Flexible symbol, and have a similar categorization to the Flexible symbol. For this reason, for example, as an exemplary method of adding a slot format, a format obtained from replacing "F" in an existing slot format with "C_{D}" or "C_{U}" may be added. Note that, since "F" is sometimes used as a gap when transitioning to "D" or "U," it is not necessary to replace "F" with "C_{D}" or "C_{U}" in all slot formats.

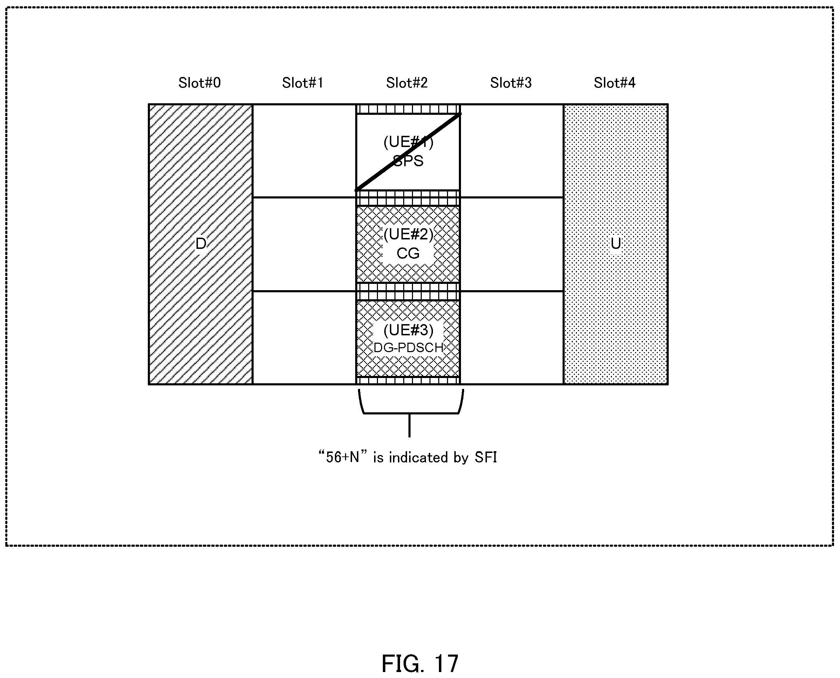

FIG. 17 illustrates an example of applying Method 3 to Case 4 (see, for example, FIG. 4). In FIG. 17, as for the Slot format, the example illustrated in FIG. 16 is used.

As illustrated in FIG. 17, in order to meet the conditions of Case 4 (where SPS is disabled and CG is enabled), base station 100 configures "56+N" for Slot #2 using SFI. In the slot format "56+N," the semi-static transmission is enabled, and the semi-static reception is disabled for all symbols. Hence, in FIG. 17, the semi-static transmission is enabled and the semi-static reception is disabled for Slot #2 to which "56+N" is indicated by SFI. Thus, in FIG. 17, SPS in UE #1 is disabled, and CG in UE #2 is enabled. Further, in a semi-static Flexible symbol in a slot in which "56+N" is indicated by the SFI, the dynamic scheduling is effective, and thus, the reception of DG-PDSCH in UE #3 is not affected. Thus, Method 3 makes it possible to achieve an operation that meets the conditions of Case 4.

As described above, in Method 3, base station 100 and terminal 200 configure either the enabling or the disabling of the semi-static transmission and reception based on a Slot format corresponding to either the enabling or the disabling of the semi-static transmission and reception. The enabling/disabling of the semi-static transmission and reception in SBFD is thereby achieved. The achievement of the enabling/disabling of the semi-static transmission and reception makes it possible to improve the degree of freedom in scheduling and to improve the resource utilization efficiency.

Further, in the slot format of Method 3, the enabling and the disabling are configured (or designated) in symbol units. For this reason, in Method 3, the degree of freedom in scheduling can be further improved as compared to Method 2.

The methods for enabling/disabling the semi-static transmission and reception have been each described, thus far.

As described above, in the present embodiment, base station 100 and terminal 200 decides or determines the enabling and disabling of the semi-static transmission and reception individually for each of a plurality of subbands obtained by dividing a frequency band, in a scheme in which a transmission direction is configured for each of the plurality of subbands.

Thus, in SBFD, even when the transmission directions configured for a plurality of subbands are different from each other, the enabling/disabling of the semi-static transmission and reception can be individually configured for each of the plurality of subbands, and thus, the enabling/disabling of the semi-static transmission and reception in SBFD can be appropriately performed regardless of a combination of the semi-static transmission and reception and the dynamically-indicated transmission and reception. Thus, according to the present embodiment, it is possible to, for example, appropriately perform indication of resource allocation.

### (Other Embodiments)

Note that, in the above embodiment, CG (example of semi-static transmission) and SPS (example of semi-static reception) have been described as examples of the semi-static transmission and reception, but the semi-static transmission and reception are not limited to SPS and CG, and other transmission and reception may be applied. For example, the semi-static transmission and reception may be applied to PUCCH, RACH, SRS, CSI-RS, PDCCH, and the like.

Further, in the present embodiment, the operation in a case where a subband is placed on a Flexible symbol that is configured semi-statically and the SBFD operation is performed has been described, but the operation may be applied to an SBFD symbol (symbol on which subband of SBFD is placed) when the SBFD symbol is explicitly configured. For example, the processing of enabling/disabling the semi-static transmission and reception, which has been applied to the Flexible symbol, may be applied to the SBFD symbol. This may be a case where the SBFD symbol is configured as a new symbol type, or a case where the SBFD symbol is indicated using an existing symbol type. For example, a symbol for which "D" is configured in the Cell-specific UL/DL configuration may be regarded as an SBFD symbol when "U" is configured in the UE-specific UL/DL configuration. In the SBFD symbol, both uplink and downlink are present simultaneously, and thus, the control on enabling/disabling of the semi-static transmission and reception can improve the scheduling flexibility and the resource utilization efficiency.

Further, the enabling/disabling of the semi-static transmission and reception described in the above embodiment may be applied to Full Duplex (for example, Duplex scheme in which uplink and downlink are present simultaneously in the same time and frequency resource). Even in full duplex, uplink and downlink are present simultaneously in the same symbol, and thus, application of the enabling/disabling of the semi-static transmission and reception illustrated in the present embodiment makes it possible to improve the degree of freedom in scheduling and to improve the resource utilization efficiency.

Further, in the above-described embodiments, values such as the number of subbands, the number of terminals, the number of slots, and the number of symbols are merely examples and are not limited.

### (Complement)

Information indicating whether terminal 200 supports the functions, operations, or pieces of processing that have been indicated in the above-mentioned embodiments may be transmitted (or indicated) from terminal 200 to base station 100, as capability information or a capability parameter for terminal 200, for example.

The capability information may include information elements (IEs) that individually indicate whether terminal 200 supports at least one of the functions, operations, or pieces of processing that have been described in the above-mentioned embodiments. Alternatively, the capability information may include information elements that indicate whether terminal 200 supports a combination of any two or more of the functions, operations, or pieces of processing that have been described in the above-mentioned embodiments.

Base station 100 may determine (or decide or assume), for example, based on the capability information received from terminal 200, the functions, operations, or processes that are supported (or not supported) by terminal 200, which is a transmission source of the capability information. Base station 100 may execute operations, processes, or control in accordance with a determination result based on the capability information. For example, base station 100 may control semi-static transmission and reception for terminal 200 based on the capability information received from terminal 200.

Note that in a case where terminal 200 does not entirely support the functions, operations, or pieces of processing described in the above-mentioned embodiments, such an unsupported part of the functions, operations, or processes may be interpreted as a limitation in terminal 200. For example, information or a request relating to such limitation may be indicated to base station 100.

The information on the capability or the limitation of terminal 200 may be defined by standards or may be implicitly indicated to base station 100 in association with information known in base station 100 or information to be transmitted to base station 100, for example.

### (Control Signals)

In the present disclosure, the downlink control signal (or downlink control information) related to an exemplary embodiment of the present disclosure may be, for example, a signal (or information) transmitted in a physical downlink control channel (PDCCH) in a physical layer or may be a signal (or information) transmitted in a medium access control control element (MAC CE) or a radio resource control (RRC) in a higher layer. Further, the signal (or information) is not limited to that indicated by the downlink control signal, but may be predefined in specifications (or standards) or may be configured in advance to the base station and the terminal.

In the present disclosure, the uplink control signal (or uplink control information) according to an exemplary embodiment of the present disclosure may be, for example, a signal (or information) transmitted in PUCCH in the physical layer or may be a signal (or information) transmitted in the MAC CE or RRC in the higher layer. Further, the signal (or information) is not limited to that indicated by the uplink control signal, but may be predefined in specifications (or standards) or may be configured in advance to the base station and the terminal. Further, the uplink control signal may be replaced with, for example, uplink control information (UCI), 1st stage sidelink control information (SCI) or 2nd stage SCI.

### (Base Station)

In an exemplary embodiment of the present disclosure, the base station may be, for example, a transmission reception point (TRP), a clusterhead, an access point, a remote radio head (RRH), an eNodeB (eNB), a gNodeB (gNB), a base station (BS), a base transceiver station (BTS), a base unit, a gateway, or the like. Further, in sidelink communication, the terminal may play a role of the base station. Furthermore, instead of the base station, a relay apparatus that relays communication between a higher node and a terminal may be used. The base station may be a roadside unit as well.

### (Uplink/Downlink/Sidelink)

An exemplary embodiment of the present disclosure may be applied to, for example, any of uplink, downlink, and sidelink. For example, an exemplary embodiment of the present disclosure may be applied to uplink channels, such as a Physical Uplink Shared Channel (PUSCH), a Physical Uplink Control Channel (PUCCH), and a Physical Random Access Channel (PRACH), downlink channels, such as a Physical Downlink Shared Channel (PDSCH), PDCCH, and a Physical Broadcast Channel (PBCH), and side link channels, such as a Physical Sidelink Shared Channel (PSSCH), a Physical Sidelink Control Channel (PSCCH), and a Physical Sidelink Broadcast Channel (PSBCH).

Note that, PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### (Data Channels/Control Channels)

An exemplary embodiment of the present disclosure may be applied to, for example, any of data channels and control channels. For example, channels in an exemplary embodiment of the present disclosure may be replaced with any of data channels including PDSCH, PUSCH, and PSSCH, or control channels including PDCCH, PUCCH, PBCH, PSCCH, and PSBCH.

### (Reference Signals)

In an exemplary embodiment of the present disclosure, the reference signals are, for example, signals known to both a base station and a mobile station and each reference signal may be referred to as a reference signal (RS) or sometimes a pilot signal. Each reference signal may be any of a Demodulation Reference Signal (DMRS), a Channel State Information-Reference Signal (CSI-RS), a Tracking Reference Signal (TRS), a Phase Tracking Reference Signal (PTRS), a Cell-Specific Reference Signal (CRS), or a Sounding Reference Signal (SRS).

### (Time Intervals)

In an exemplary embodiment of the present disclosure, time resource units are not limited to one or a combination of slots and symbols, and may be time resource units, such as frames, superframes, subframes, slots, time slots, subslots, minislots, or symbols, orthogonal frequency division multiplexing (OFDM) symbols, single carrier-frequency division multiplexing Access (SC-FDMA) symbols, or other time resource units. The number of symbols included in one slot is not limited to any number of symbols exemplified in the embodiments described above, and may be other numbers of symbols.

### (Frequency Bands)

An exemplary embodiment of the present disclosure may be applied to any of a licensed band and an unlicensed band.

### (Communication)

An exemplary embodiment of the present disclosure may be applied to any of communication between a base station and a terminal (Uu-link communication), communication between a terminal and a terminal (Sidelink communication), and Vehicle to Everything (V2X) communication. For example, a channel in an exemplary embodiment of the present disclosure may be replaced with any of PSCCH, PSSCH, a Physical Sidelink Feedback Channel (PSFCH), PSBCH, PDCCH, PUCCH, PDSCH, PUSCH, and PBCH.

Further, an exemplary embodiment of the present disclosure may be applied to any of a terrestrial network or a non-terrestrial network (NTN) using a satellite or a high altitude pseudo satellite (HAPS). In addition, the present disclosure may be applied to a network having a large cell size, and a terrestrial network with a large latency compared with a symbol length or a slot length, such as an ultra-wideband transmission network.

### (Antenna Ports)

In an exemplary embodiment of the present disclosure, an antenna port refers to a logical antenna (antenna group) formed of one or more physical antenna(s). For example, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### <5G NR System Architecture and Protocol Stack>

3GPP has been working at the next release for the 5th generation cellular technology, simply called 5G, including the development of a new radio access technology (NR) operating in frequencies ranging up to 100 GHz. The first version of the 5G standard was completed at the end of 2017, which allowed proceeding to 5G NR standard-compliant trials and commercial deployments of terminals (e.g., smartphones).

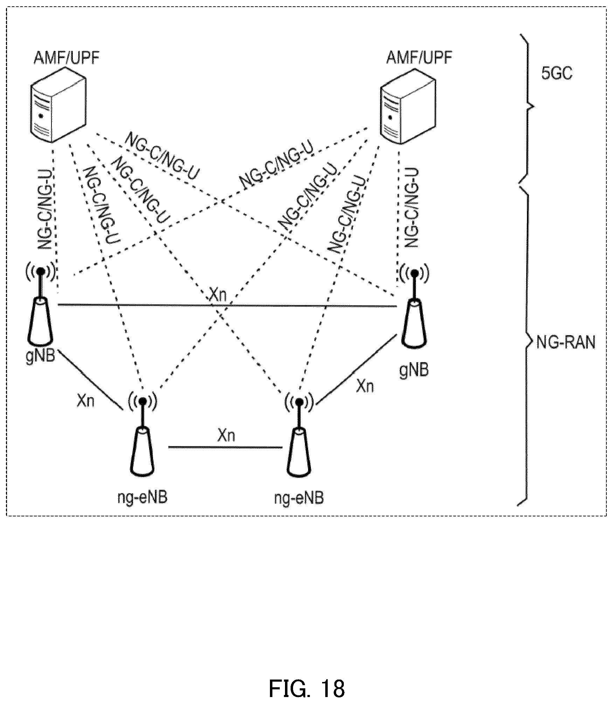

For example, the overall system architecture assumes an NG-RAN (Next Generation-Radio Access Network) that includes gNBs. The gNB provides the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g., a particular core entity performing the AMF) by means of the NG-C interface and to the UPF (User Plane Function) (e.g., a particular core entity performing the UPF) by means of the NG-U interface. The NG-RAN architecture is illustrated in FIG. 18 (see e.g., 3GPP TS 38.300 v15.6.0, section 4).

The user plane protocol stack for NR (see e.g., 3GPP TS 38.300, section 4.4.1) includes the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new Access Stratum (AS) sublayer (SDAP, Service Data Adaptation Protocol) is introduced above the PDCP (see e.g., sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the PDCP, RLC, and MAC sublayers are listed respectively in sections 6.4, 6.3, and 6.2 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. The physical layer also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. Examples of the physical channel include a Physical Random Access Channel (PRACH), a Physical Uplink Shared Channel (PUSCH), and a Physical Uplink Control Channel (PUCCH) as uplink physical channels, and a Physical Downlink Shared Channel (PDSCH), a Physical Downlink Control Channel (PDCCH), and a Physical Broadcast Channel (PBCH) as downlink physical channels.

Use cases/deployment scenarios for NR could include enhanced mobile broadband (eMBB), ultra-reliable low-latency communications (URLLC), and massive machine type communication (mMTC), which have diverse requirements in terms of data rates, latency, and coverage. For example, eMBB is expected to support peak data rates (20 Gbps for downlink and 10 Gbps for uplink) and user-experienced data rates in the order of three times what is offered by IMT-Advanced. On the other hand, in case of URLLC, the tighter requirements are put on ultra-low latency (0.5 ms for UL and DL each for user plane latency) and high reliability (1-10-5 within 1 ms). Finally, mMTC may preferably require high connection density (1,000,000 devices/km² in an urban environment), large coverage in harsh environments, and extremely long-life battery for low cost devices (15 years).

Therefore, the OFDM numerology (e.g., subcarrier spacing, OFDM symbol duration, cyclic prefix (CP) duration, and number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15 kHz, 30 kHz, 60 kHz... are being considered at the moment. The symbol duration Tu and the subcarrier spacing Δf are directly related through the formula Δf = 1/Tu. In a similar manner as in LTE systems, the term "resource element" can be used to denote a minimum resource unit being composed of one subcarrier for the duration of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v15.6.0).

### <Functional Split between NG-RAN and 5GC in 5G NR>

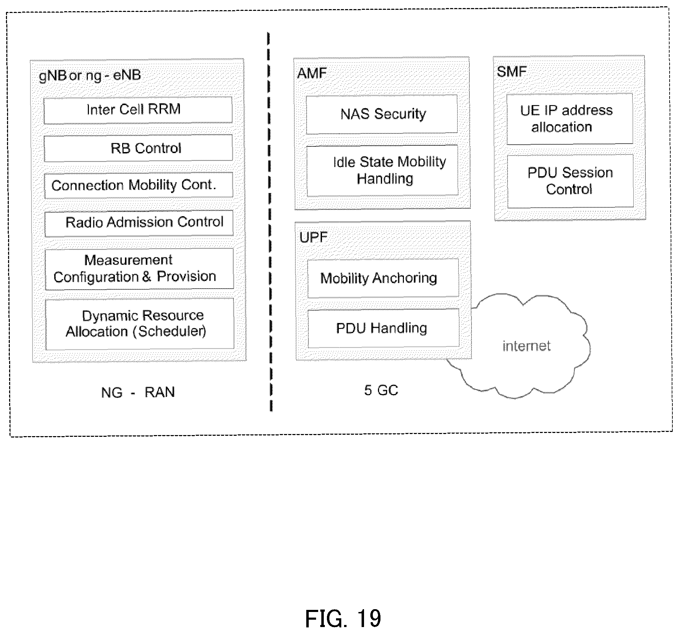

FIG. 19 illustrates the functional split between the NG-RAN and the 5GC. A logical node of the NG-RAN is gNB or ng-eNB. The 5GC includes logical nodes AMF, UPF, and SMF.

For example, gNB and ng-eNB hosts the following main functions:
- Radio Resource Management functions such as Radio Bearer Control, Radio Admission Control, Connection Mobility Control, and dynamic allocation (scheduling) of both uplink and downlink resources to a UE;
- IP header compression, encryption, and integrity protection of data;
- Selection of an AMF during UE attachment in such a case when no routing to an AMF can be determined from the information provided by the UE;
- Routing user plane data towards the UPF;
- Routing control plane information towards the AMF;
- Connection setup and release;
- Scheduling and transmission of paging messages;
- Scheduling and transmission of system broadcast information (originated from the AMF or an action management maintenance function (OAM: Operation, Admission, Maintenance));
- Measurement and measurement reporting configuration for mobility and scheduling;
- Transport level packet marking in uplink;
- Session management;
- Support of network slicing;
- QoS flow management and mapping to data radio bearers;
- Support of UEs in the RRC_INACTIVE state;
- Distribution function for NAS messages;
- Radio access network sharing;
- Dual connectivity; and
- Tight interworking between NR and E-UTRA.

The Access and Mobility Management Function (AMF) hosts the following main functions:
- Function of Non-Access Stratum (NAS) signaling termination;
- NAS signaling security;
- Access Stratum (AS) security control;
- Inter-Core Network (CN) node signaling for mobility between 3GPP access networks;
- Idle mode UE reachability (including control and execution of paging retransmission);
- Registration area management;
- Support of intra-system and inter-system mobility;
- Access authentication;
- Access authorization including check of roaming rights;
- Mobility management control (subscription and policies);
- Support of network slicing; and
- Session Management Function (SMF) selection.

In addition, the User Plane Function (UPF) hosts the following main functions:
- Anchor Point for intra-/inter-RAT mobility (when applicable);
- External Protocol Data Unit (PDU) session point for interconnection to a data network;
- Packet routing and forwarding;
- Packet inspection and a user plane part of Policy rule enforcement;
- Traffic usage reporting;
- Uplink classifier to support routing traffic flows to a data network;
- Branching point to support multi-homed PDU session;
- QoS handling for user plane (e.g., packet filtering, gating, UL/DL rate enforcement);
- Uplink traffic verification (SDF to QoS flow mapping); and
- Function of downlink packet buffering and downlink data notification triggering.

Finally, the Session Management Function (SMF) hosts the following main functions:
- Session management;
- UE IP address allocation and management;
- Selection and control of UPF;
- Configuration function for traffic steering at the User Plane Function (UPF) to route traffic to a proper destination;
- Control part of policy enforcement and QoS; and
- Downlink data notification.

### <RRC Connection Setup and Reconfiguration Procedure>

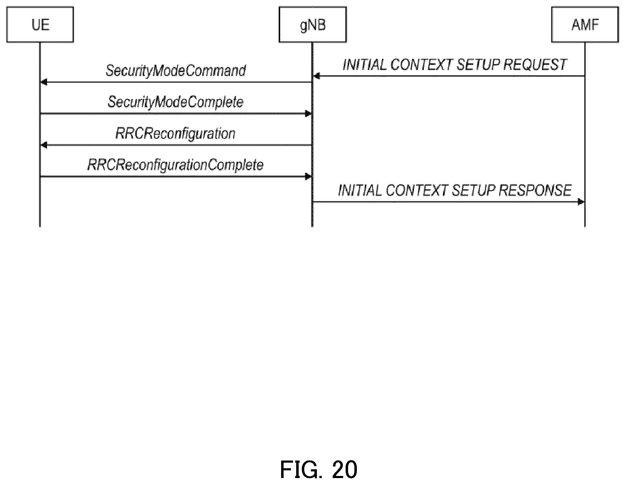

FIG. 20 illustrates some interactions between a UE, gNB, and AMF (a 5GC Entity) performed in the context of a transition of the UE from RRC_IDLE to RRC_CONNECTED for the NAS part (see TS 38 300 v15.6.0).

The RRC is higher layer signaling (protocol) used to configure the UE and gNB. With this transition, the AMF prepares UE context data (which includes, for example, a PDU session context, security key, UE Radio Capability, UE Security Capabilities, and the like) and sends it to the gNB with an INITIAL CONTEXT SETUP REQUEST. Then, the gNB activates the AS security with the UE. This activation is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer (s), DRB (s) by means of transmitting to the UE the RRCReconfiguration message and, in response, receiving by the gNB the RRCReconfigurationComplete from the UE. For a signaling-only connection, the steps relating to the RRCReconfiguration are skipped since SRB2 and DRBs are not set up. Finally, the gNB informs the AMF that the setup procedure is completed with INITIAL

### CONTEXT SETUP RESPONSE.

Thus, the present disclosure provides a 5th Generation Core (5GC) entity (e.g., AMF, SMF, or the like) including control circuitry, which, in operation, establishes a Next Generation (NG) connection with a gNodeB, and a transmitter, which, in operation, transmits an initial context setup message to the gNodeB via the NG connection such that a signaling radio bearer between the gNodeB and a User Equipment (UE) is configured up. Specifically, the gNodeB transmits Radio Resource Control (RRC) signaling including a resource allocation configuration Information Element (IE) to the UE via the signaling radio bearer. Then, the UE performs an uplink transmission or a downlink reception based on the resource allocation configuration.

### <Usage Scenarios of IMT for 2020 and beyond>

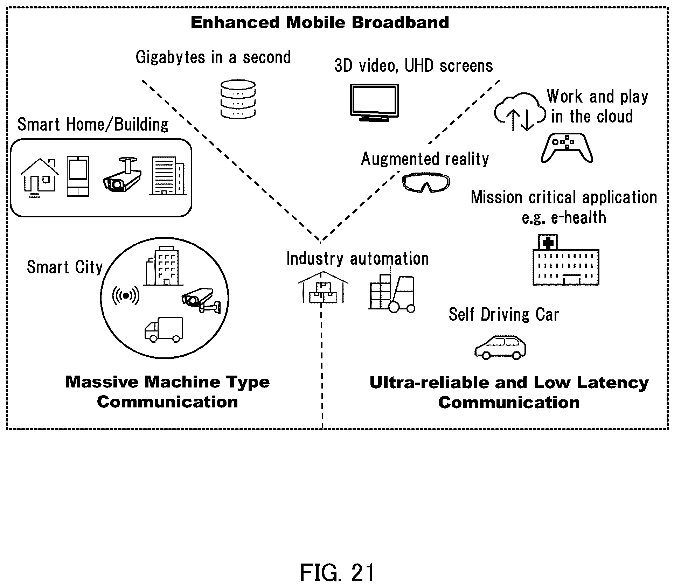

FIG. 21 illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications (mMTC). FIG. 21 illustrates some examples of envisioned usage scenarios for IMT for 2020 and beyond (see e.g., ITU-R M.2083 FIG. 2).

The URLLC use case has stringent requirements for capabilities such as throughput, latency and availability. The URLLC use case has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements configured by TR 38.913. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1 ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency/higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-latency sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, for example, for URLLC and mMTC, is high reliability or ultra-reliability. Several mechanisms can improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability improvement in general, regardless of particular communication scenarios.

For NR URLLC, further use cases with tighter requirements have been identified such as factory automation, transport industry and electrical power distribution. The tighter requirements are higher reliability (up to 10-6 level), higher availability, packet sizes of up to 256 bytes, time synchronization down to the order of a few µs where the value can be one or a few µs depending on frequency range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements are possible. The term "mini-slot" refers to a Transmission Time Interval (TTI) including a smaller number of symbols than a slot (a slot comprising fourteen symbols).

### <QoS Control>

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearer (DRB) together with the PDU Session, e.g., as illustrated above with reference to FIG. 20. Further, additional DRB (s) for QoS flow (s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

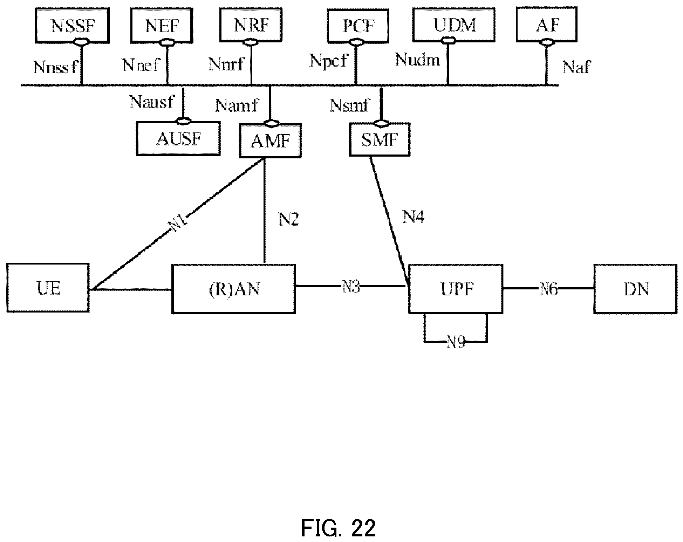

FIG. 22 illustrates a 5G NR non-roaming reference architecture (see TS 23.501 v16.1.0, section 4.23). An Application Function (AF), e.g., an external application server hosting 5G services, exemplarily described in FIG. 21, interacts with the 3GPP Core Network in order to provide services, for example to support application influence on traffic routing, accessing Network Exposure Function (NEF) or interacting with the Policy framework for policy control (see Policy Control Function, PCF), e.g., QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

FIG. 22 illustrates further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g., operator services, Internet access or 3rd party services. All of or a part of the core network functions and the application services may be deployed and running on cloud computing environments.

In the present disclosure, thus, an application server (for example, AF of the 5G architecture), is provided that includes: a transmitter, which, in operation, transmits a request containing a QoS requirement for at least one of URLLC, eMMB and mMTC services to at least one of functions (for example NEF, AMF, SMF, PCF,UPF, etc.) of the 5GC to establish a PDU session including a radio bearer between a gNodeB and a UE in accordance with the QoS requirement; and control circuitry, which, in operation, performs the services using the established PDU session.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas. Some non-limiting examples of such a communication apparatus include a phone (e.g, cellular (cell) phone, smart phone), a tablet, a personal computer (PC) (e.g, laptop, desktop, netbook), a camera (e.g, digital still/video camera), a digital player (digital audio/video player), a wearable device (e.g, wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (IoT)."

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

A terminal according to an exemplary embodiment of the present disclosure includes: control circuitry, which, in operation, in a scheme in which a transmission direction is configured for each of a plurality of bands obtained by dividing a frequency band, performs determination of enabling and disabling of semi-static transmission and reception individually for each of the plurality of bands; and communication circuitry, which, in operation, performs transmission or reception of a signal in accordance with the determination of the enabling and the disabling.

In an exemplary embodiment of the present disclosure, the control circuitry determines either the enabling or the disabling based on information indicating a state of either the enabling or the disabling of the semi-static transmission and reception.

In an exemplary embodiment of the present disclosure, the control circuitry determines either the enabling or the disabling based on a slot format corresponding to either the enabling or the disabling of the semi-static transmission and reception.

In an exemplary embodiment of the present disclosure, in the slot format, the enabling and the disabling are configured in a slot unit.

In an exemplary embodiment of the present disclosure, in the slot format, the enabling and the disabling are configured in a symbol unit.

A base station according to an exemplary embodiment of the present disclosure includes: control circuitry, which, in operation, in a scheme in which a transmission direction is configured for each of a plurality of bands obtained by dividing a frequency band, performs decision of enabling and disabling of semi-static transmission and reception performed by a terminal, individually for each of the plurality of bands; and communication circuitry, which, in operation, performs reception or transmission of a signal in accordance with the decision of the enabling and the disabling.

A communication method according to an exemplary embodiment of the present disclosure includes: in a scheme in which a transmission direction is configured for each of a plurality of bands obtained by dividing a frequency band, performing, by a terminal, determination of enabling and disabling of semi-static transmission and reception individually for each of the plurality of bands; and performing, by the terminal, transmission or reception of a signal in accordance with the determination of the enabling and the disabling.

A communication method according to an exemplary embodiment of the present disclosure includes: in a scheme in which a transmission direction is configured for each of a plurality of bands obtained by dividing a frequency band, performing, by a base station, decision of enabling and disabling of semi-static transmission and reception performed by a terminal, individually for each of the plurality of bands; and performing, by the base station, reception or transmission of a signal in accordance with the decision of the enabling and the disabling.

The disclosure of Japanese Patent Application No. 2022-128835, filed on August 12, 2022, including the specification, drawings and abstract, is incorporated herein by reference in its entirety.

### Industrial Applicability

An embodiment of the present disclosure is useful for radio communication systems.

### Reference Signs List

100 Base station
101, 201 Receiver
102, 202 Demodulator/decoder
103 Scheduler
104, 205 Control information holder
105, 203 Semi-static transmission/reception controller
106, 206 Data/control information generator
107, 207 Encoder/modulator
108, 208 Transmitter
200 Terminal
204 Controller

## Claims

1. A terminal, comprising:
control circuitry, which, in operation, in a scheme in which a transmission direction is configured for each of a plurality of bands obtained by dividing a frequency band, performs determination of enabling and disabling of semi-static transmission and reception individually for each of the plurality of bands; and
communication circuitry, which, in operation, performs transmission or reception of a signal in accordance with the determination of the enabling and the disabling.

2. The terminal according to claim 1, wherein the control circuitry determines either the enabling or the disabling based on information indicating a state of either the enabling or the disabling of the semi-static transmission and reception.

3. The terminal according to claim 1, wherein the control circuitry determines either the enabling or the disabling based on a slot format corresponding to either the enabling or the disabling of the semi-static transmission and reception.

4. The terminal according to claim 3, wherein, in the slot format, the enabling and the disabling are configured in a slot unit.

5. The terminal according to claim 3, wherein, in the slot format, the enabling and the disabling are configured in a symbol unit.

6. A base station, comprising:
control circuitry, which, in operation, in a scheme in which a transmission direction is configured for each of a plurality of bands obtained by dividing a frequency band, performs decision of enabling and disabling of semi-static transmission and reception performed by a terminal, individually for each of the plurality of bands; and
communication circuitry, which, in operation, performs reception or transmission of a signal in accordance with the decision of the enabling and the disabling.

7. A communication method, comprising:
in a scheme in which a transmission direction is configured for each of a plurality of bands obtained by dividing a frequency band,
performing, by a terminal, determination of enabling and disabling of semi-static transmission and reception individually for each of the plurality of bands; and
performing, by the terminal, transmission or reception of a signal in accordance with the determination of the enabling and the disabling.

8. A communication method, comprising:
in a scheme in which a transmission direction is configured for each of a plurality of bands obtained by dividing a frequency band,
performing, by a base station, decision of enabling and disabling of semi-static transmission and reception performed by a terminal, individually for each of the plurality of bands; and
performing, by the base station, reception or transmission of a signal in accordance with the decision of the enabling and the disabling.
